# EUROPÄISCHE PATENTSCHRIFT

(11) **EP 0 281 035 B1**
(45) Veröffentlichungstag und Bekanntmachung des Hinweises auf die Patenterteilung: **10.02.1993**
(21) Anmeldenummer: 88102926.8
(22) Anmeldetag: 26.02.1988
(51) Int. Cl.: G01B 15/02, G01B 17/02

(54) **Überwachungsverfahren für die elektrodynamische Wanddicken- und Fehlerprüfung**
Monitoring process for the electrodynamic wall thickness and error investigation
Procédé de surveillance pour la détermination électrodynamique de l'épaisseur et des erreurs

(30) Priorität: 05.03.1987 DE 3707048
(43) Veröffentlichungstag der Anmeldung: 07.09.1988
(73) Patentinhaber: SIEMENS AKTIENGESELLSCHAFT, 80333 München (DE)
(72) Erfinder: Quittkat, Jörg, Dipl.-Ing., D-6451 Neuberg 1 (DE); Thiel, Gerhard, Dipl.-Ing., D-6463 Freigericht 1 (DE)

(56) Entgegenhaltungen:
- DE-A- 2 853 170
- DE-A- 3 327 526
- DE-C- 3 401 144
- GB-A- 1 121 767
- TECHNICA, 19. Jahrgang, Nr. 10, 8. Mai 1970, Seiten 857-863, Birkhäuser Verlag, Basel, CH; K.G. Walther: "Wanddickenmessung mit Ultraschall"

## Beschreibung

Die Erfindung betrifft ein verfahren zur Überwachung von elektrischen Bauteilen einer Einrichtung zur elektrodynamischen Wanddicken- und Fehlerprüfung, bei der ein Sender kurzzeitige Signale erzeugt, die über eine Sendespule eines elektrodynamischen Wandlers in das zu prüfende Werkstück eingespeist werden, wo die Signale reflektiert werden und wobei die reflektierten Signale einer Empfängerspule und von dort über einen Verstärker einer Auswerteeinheit zugeführt werden.

Bei der elektrodynamischen Wanddicken- und Fehlerprüfung wird das vom Sender erzeugte elektrische Sendesignal über den elektrodynamischen Wandler in das zu prüfende Werkstück eingespeist. Dieses Sendesignal weist eine sehr hohe Energie auf. Im Werkstück wird das Signal reflektiert und nach Umsetzung in ein elektrisches Signal durch den Wandler von diesem der Auswerteeinheit zur Auswertung zugeführt. Das reflektierte elektrische Signal weist im Vergleich zum Sendesignal eine sehr geringe Energie auf, so daß ein empfindlicher Verstärker notwendig ist. Für die Bestimmung der Wanddicke des Werkstückes und für die Erkennung von Fehlern innerhalb des Werkstückes wird von der Auswerteeinheit die Zeitdauer zwischen dem Auftreten des Sendesignales und dem Empfang des reflektierten Signales sowie die Amplitude des reflektierten Signales erfaßt.

Die vorerwähnte Zeitdauer und auch die Amplitude des reflektierten Signales werden jedoch nicht nur durch das zu prüfende Werkstück bestimmt, sondern auch durch die Parameter von elektrischen Bauteilen und von Zuleitungen. Treten bei diesen Parametern Änderungen auf, dann führt dies zu Veränderungen in der Zeitdauer zwischen dem Auftreten des Sendesignales und dem Empfang des reflektierten Signales sowie in der Amplitude des reflektierten Signales. Dies wiederum führt zu Fehlmessungen, da diese Änderungen meist nicht erkannt werden.

Es wäre wohl theoretisch möglich, den Sendeimpuls, der über den elektrodynamischen Wandler direkt von der Sendespule der Empfängerspule zugeführt wird, auszuwerten, jedoch ist dies wegen der hohen Energie des Sendeimpulses und der hohen Empfindlichkeit der Empfängerspule nicht möglich. Vielmehr ist es erforderlich, beim Auftreten des Sendeimpulses den Eingang der Auswerteeinheit durch eine Zeittorschaltung zu sperren, damit die Auswerteeinheit durch dieses direkt übertragene Sendesignal nicht übersteuert oder gar zerstört wird.

Aus der DE-A- 3 327 526 ist ein Verfahren zur Bestimmung der Wanddicke von Werkstücken bekannt, bei dem in einem Vorlaufkörper als Testreflektor eine transversal gebohrte Nut angeordnet ist. Das an diesem Testreflektor reflektierte Signal wird überwacht. Bei unterschiedlichen Prüfkopftypen befindet sich der Testreflektor an einem unterschiedlichen Ort. Der Testreflektor dient folglich hauptsächlich dazu, zu erkennen, welcher Prüfkopftyp momentan eingesetzt ist. Bei einer erhöhten Temperatur am Prüfkopf ändert sich die Signallaufzeit im Vorlaufkörper. Das am Testreflektor reflektierte Prüfsignal kann folglich einen Hinweis auf eine zu hohe Temperatur des Prüfkopfes geben.

Über Temperatureinflüsse hinaus kann durch Veränderungen der Parameter von elektronischen Bauteilen einer Einrichtung zur Durchführung des Überwachungsverfahrens die Zeitdauer zwischen dem Auftreten des Sendesignals und dem Empfang des reflektierten Signals beeinflußt werden. Als Folge davon würden falsche Wanddicken oder Fehlerorte angezeigt.

Es besteht die Aufgabe, ein Überwachungsverfahren der eingangs genannten Art so auszubilden, daß Veränderungen der Parameter von Bauteilen, die die Zeitdauer zwischen dem Auftreten des Sendesignales und dem Empfang des reflektierten Signales sowie dessen Amplitude beeinflussen, sicher erfaßt werden können.

Die Aufgabe wird gemäß der Erfindung dadurch gelöst, daß die vom Sender erzeugten Signale zur Verzögerung einer Verzögerungsleitung zugeführt werden, die mindestens ein Dämpfungsglied enthält und die über den elektrodynamischen Wandler mit der Auswerteeinheit verbunden ist, und daß verzögerte Signale in der Auswerteeinheit mit einem Sollwert eines verzögerten Signals verglichen werden.

Durch das Vorsehen der Verzögerungsleitung wird eine definierte Zeitdauer zwischen dem Auftreten Ges Sendesignales und dem Empfang des verzögerten Signales vorgegeben. Diese Zeitdauer (vorgegebene Soll-Zeit) wird durch das zu prüfende Werkstück nicht beeinflußt; jedoch findet eine Beeinflussung dieser Zeitdauer statt, wenn sich zeitbeeinflussende Parameter von Bauteilen des Überwachungssystems ändern. In der Auswerteeinheit wird eine Abweichung der hier gemessenen Ist-Zeit von der vorgegebenen Soll-Zeit erfaßt und als Fehler erkannt.

Durch das Dämpfungsglied wird erreicht, daß die Energie des verzögerten Signales im Bereich der Energie der reflektierten Signale liegt, die die Auswerteeinheit normalerweise auswertet. Weicht beispielsweise die Energie des Sendesignales infolge eines Fehlers im Sender von der Soll-Energie ab, dann weist das verzögerte Signal eine entsprechend geringere Energie auf, was von der Auswerteeinheit durch Vergleich mit der Soll-Energie des verzögerten Signales als Fehler erkannt wird. Die Energie des verzögerten Signales wird hierbei ebenfalls nicht durch das zu prüfende Werkstück beeinflußt.

Vorteilhafte Ausgestaltungen sind den abhängigen Ansprüchen zu entnehmen.

Die Verzögerungsleitung kann eine Ultraschallverzögerungsleitung oder eine elektromagnetische Verzögerungsleitung sein.

Beispielsweise weist eine Ultraschallverzögerungsleitung mindestens einen piezoelektrischen oder magnetostriktiven Wandler und einen damit verbundenen Schalleiter auf.

Die Signale werden beispielsweise im Schalleiter zum Wandler zurückreflektiert.

Die Eigenfrequenzen des piezoelektrischen oder magnetostriktiven Wandlers und des elektrodynamischen Wandlers sind beispielsweise etwa gleich.

Das Dämpfungsglied ist beispielsweise mindestens ein vor der Verzögerungsleitung geschalteter Widerstand.

Der Auswerteeinheit ist beispielsweise mindestens eine Zeittorschaltung zugeordnet, die zum einen am Auftreten des reflektierten Signales und zum anderen beim Auftreten des verzögerten Signales öffnet.

Ein Ausführungsbeispiel der Erfindung wird nachfolgend anhand der Zeichnungen näher erläutert. Es zeigen:
- FIG 1: ein Blockschaltbild eines Überwachungssystems für die elektrodynamische Wanddicken- und Fehlerprüfung.
- FIG 2: ein Zeitdiagramm der auftretenden Signale.

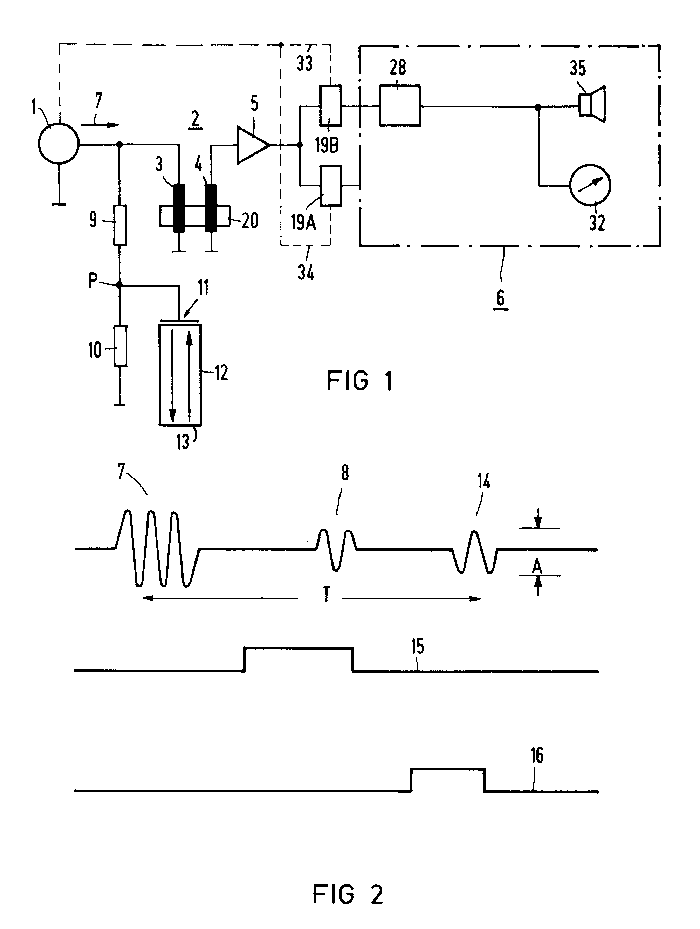

Gemäß FIG 1 ist in bekannter Weise ein Sender 1 vorhanden, dessen Sendesignal einem elektrodynamischen Wandler 2 zugeführt wird. Dieser elektrodynamische Wandler 2 besteht im gezeigten Ausführungsbeispiel aus einer Sendespule 3 und einer Empfangsspule 4, die an einem zu prüfenden Werkstück 20 angeordnet sind. Es ist jedoch auch möglich, nur eine einzige Spule vorzusehen, die als Sende- und Empfangsspule dient. Die Spulen 3, 4 sind jeweils mit einem Ende an Masse gelegt. Mit der Empfangsspule 4 steht über einen Verstärker 5 und zwei Zeittorschaltungen 19 A und 19 B eine Auswerteeinheit 6 in Verbindung. Die Zeittorschaltungen 19 A und 19 B sind vom Sender 1 aus über Leitungen 33, 34 ansteuerbar.

Gemäß FIG 2 erzeugt der Sender 1 ein Sendesignal 7, das aus einem kurzen Wechselstromsignal besteht. Nach Umsetzen dieses Sendesignales 7 durch die Sendespule 3 und Reflexion des umgesetzten Signales im zu prüfenden Werkstück 20 setzt die Empfangsspule 4 das reflektierte Signal in ein elektrisches Signal 8 um, das über den Verstärker 5 der Auswerteeinheit 6 zugeführt wird. Insoweit sind der Aufbau und die Wirkungsweise der Schaltung bekannt.

Mit dem Ausgang des Senders 1 verbunden ist ein aus zwei ohmschen Widerständen 9, 10 bestehendes Dämpfungsglied. Diese Widerstände 9, 10 sind in Reihe zwischen dem Ausgang des Senders 1 und Masse geschaltet. An der Verbindungsstelle P zwischen den beiden Widerständen 9, 10 ist ein Piezoschwinger 11 angeschlossen. Dieser Piezoschwinger 11 ist angeordnet auf dem einen Ende eines Schalleiters, speziell eines Plexiglasstabes 12. Der Piezoschwinger 11 und der Plexiglasstab 12 bilden zusammen eine Ultraschall-Verzögerungsleitung.

Das vom Sender 1 erzeugte Sendesignal 7 wird so nicht nur der Sendespule 3, sondern über den ersten Widerstand 9 auch dem Piezoschwinger 11 zugeführt, der es in ein Ultraschallsignal umsetzt, das sich im Plexiglasstab 12 fortpflanzt und das am anderen Ende 13 des Stabes 12 zurück auf den Piezoschwinger 11 reflektiert wird. Die hin- und zurücklaufenden Ultraschallsignale sind durch zwei Pfeile gekennzeichnet. Im Piezoschwinger 11 wird das reflektierte Ultraschallsignal wiederum in ein elektrisches Signal umgesetzt, das gedämpft durch die Widerstände 9, 10 der Sendespule 3 zugeführt wird. Von dort wird es auf die Empfangsspule 4 gekoppelt oder transformiert und der Auswerteeinheit 6 über den Verstärker 5 als verzögertes und gedämpftes Signal 14 zugeführt.

Der Auswerteeinheit 6 sind zwei ihren Eingang zeitweise sperrende Zeittorschaltungen 19 A, 19 B parallel vorgeschaltet. Die erste Zeittorschaltung 19 A öffnet innerhalb des Zeitbereiches, in dem die reflektierten Signale 8 auftreten. Dies wird durch die Kurve 15 verdeutlicht. Die zweite Zeittorschaltung 19 B öffnet in dem Zeitbereich, in dem das verzögerte und gedämpfte Signal 14 auftritt. Dies ist durch die Kurve 16 verdeutlicht. Auf diese Weise werden weitere, dem Reflexionssignal 8 folgende Reflexionssignale ausgeblendet.

Für gegebene Bauteileparameter der Schaltung nach FIG 1 sind der zeitliche Abstand T zwischen den Signalen 7 und 14 und die Amplitude A des Signales 14 stets konstant. Es gilt: T=T* und A=A^{*}, wobei T^{*} und A* durch die nicht defekten Bauteile vorgegebene Sollwerte sind. Tritt ein Fehler bei einem Bauteil der Schaltung nach FIG 1 auf, dann verändern sich die Werte von T und/oder A, d.h. die gemessenen Ist-Werte T und/oder A stimmen nicht mehr mit den vorgegebenen Soll-Werten T^{*} und A^{*} überein. Durch einen Ist-Soll-Vergleich, der über die Zeittorschaltung 19 B eintreffenden Werte in der Auswerteeinheit 6 wird dort eine Fehleranzeige bewirkt. Die Auswerteeinheit 6 enthält zu diesem Zweck bevorzugt einen Sollwertvergleicher 28 für den Ist-Soll-Vergleich und eine Anzeigevorrichtung 32 für die Differenz von Soll- und Ist-Wert, d.h. von (A^{*}-A) und/oder (T^{*}-T). Auch kann eine Alarmvorrichtung 35 vorhanden sein.

Die Eigenfrequenz des Piezoschwingers 11 liegt vorzugsweise im Eigenfrequenzbereich des elektrodynamischen Wandlers 2.

Soll die Überwachung nur während Meßpausen des Meßsystems erfolgen, so ist es möglich, den Piezoschwinger 11 nur während dieser Zeiten zuzuschalten.

Anstelle der dargestellten Ultraschall-Verzögerungsleitung 11, 12 kann auch eine elektromagnetische Verzögerungsleitung vorgesehen werden, die aus als solchen bekannten T- oder π- Gliedern besteht. Das verzögerte und gedämpfte Signal wird hierbei durch Reflexion des Sendeimpulses am offenen oder kurzgeschlossenen Ende der elektromagnetischen Verzögerungsleitung erzeugt. Ist diese elektromagnetische Verzögerungsleitung aus Längsinduktivitäten und Querkapazitäten aufgebaut, dann erfolgt die Bedämpfung des Signales durch die ohmschen Widerstände der Längsinduktivitäten, so daß die Dämpfungswiderstände 9, 10 entfallen können.

## Patentansprüche

1. Verfahren zur Überwachung von elektrischen Bauteilen einer Einrichtung zur elektrodynamischen Wanddicken- und Fehlerprüfung, bei der ein Sender (1) kurzzeitige Signale (7) erzeugt, die über eine Sendespule (3) eines elektrodynamischen Wandlers (2) in das zu prüfende Werkstück (20) eingespeist werden, wo die Signale (7) reflektiert werden und wobei die reflektierten Signale (8) einer Empfängerspule (4) und von dort über einen Verstärker (5) einer Auswerteeinheit (6) zugeführt werden,
**dadurch gekennzeichnet,** daß die im Sender (1) erzeugten Signale (7) zur Verzögerung einer Verzögerungsleitung (11, 12) zugeführt werden, die mindestens ein Dämpfungsglied (9) enthält und die über den elektrodynamischen Wandler (2) mit der Auswerteeinheit (6) verbunden ist, und daß verzögerte Signale (14) in der Auswerteeinheit (6) mit einem Sollwert für ein verzögertes Signal (14) verglichen werden.

2. Verfahren zur Überwachung nach Anspruch 1,
**dadurch gekennzeichnet,** daß die Verzögerungsleitung eine Ultraschall-Verzögerungsleitung (11,12) ist.

3. Verfahren zur Überwachung nach Anspruch 1,
**dadurch gekennzeichnet,** daß die Verzögerungsleitung eine elektromagnetische Verzögerungsleitung ist.

4. Verfahren zur Überwachung nach Anspruch 2,
**dadurch gekennzeichnet,** daß die Ultraschall-Verzögerungsleitung (11,12) mindestens einen piezoelektrischen oder magnetostriktiven Wandler (11) und einen damit verbundenen Schalleiter (12) aufweist.

5. Verfahren zur Überwachung nach Anspruch 4,
**dadurch gekennzeichnet,** daß die Signale im Schalleiter (12) zum Wandler (11) zurückreflektiert werden.

6. Verfahren zur Überwachung nach Anspruch 4 oder 5,
**dadurch gekennzeichnet,** daß die Eigenfrequenzen des piezoelektrischen oder magnetostriktiven Wandlers (11) und des elektrodynamischen Wandlers (2) etwa gleich sind.

7. Verfahren zur Überwachung nach einem der Ansprüche 1 bis 6,
**dadurch gekennzeichnet,** daß das Dämpfungsglied mindestens ein vor der Verzögerungsleitung (11,12) geschalteter Widerstand (9) ist.

8. Verfahren zur Überwachung nach einem der Ansprüche 1 bis 7,
**dadurch gekennzeichnet,** daß der Auswerteeinheit (6) mindestens eine Zeittorschaltung (19 A, 19 B) zugeordnet ist, die zum einen beim Auftreten des reflektierten Signales (8) und zum anderen beim Auftreten des verzögerten Signales (14) öffnet.

## Claims

1. Process for monitoring electrical components of a device for electrodynamic wall thickness and defect testing, in which a transmitter (1) generates brief signals (7), which are fed via a transmitter coil (3) of an electrodynamic converter (2) into the workpiece (20) to be tested, in which the signals (7) are reflected and the reflected signals (8) are supplied to a receiver coil (4) and from there via an amplifer (5) to an evaluation unit (6),
characterised in that the signals (7) produced in the transmitter (1) are supplied to a delay line (11, 12) for the purpose of delaying, this delay line containing at least one damping element (9) and being connected via the electrodynamic converter (2) to the evaluation unit (6), and in that delayed signals (14) in the evaluation unit (6) are compared with a desired value for a delayed signal (14).

2. Process for monitoring according to claim 1, characterised in that the delay line is an ultrasonic delay line (11, 12).

3. Process for monitoring according to claim 1, characterised in that the delay line is an electromagnetic delay line.

4. Process for monitoring according to claim 2, characterised in that the ultrasonic delay line (11, 12) has at least one piezoelectric or magnetostrictive converter (11) and a sound conductor (12) connected thereto.

5. Process for monitoring according to claim 4, characterised in that the signals in the sound conductor (12) are reflected back to the converter (11).

6. Process for monitoring according to claim 4 or 5, characterised in that the natural frequencies of the piezoelectric or magnetostrictive converter (11) and of the electrodynamic converter (2) are approximately the same.

7. Process for monitoring according to one of claims 1 to 6, characterised in that the damping element is at least one resistor (9) connected upstream of the delay line (11, 12).

8. Process for monitoring according to one of claims 1 to 7, characterised in that the evaluation unit (6) is connected to at least one time gate circuit (19A, 19B) which opens on the one hand when the reflected signal (8) appears and on the other hand when the delayed signal (14) appears.

## Revendications

1. Procédé pour contrôler des composants électriques d'un dispositif de contrôle électrodynamique des épaisseurs de paroi et des défauts, et selon lequel un émetteur (1) produit des signaux de brève durée (7), qui sont envoyés, par l'intermédiaire d'une bobine d'émission (3) d'un transducteur électrodynamique (2), dans la pièce à contrôler (20), dans laquelle les signaux (7) sont réfléchis, et selon lequel les signaux réfléchis (8) sont envoyés à une bobine de réception (4) et, à partir de là, et par l'intermédiaire d'un amplificateur (5), à une unité d'évaluation (6),
caractérisé par le fait que les signaux (7) produits dans l'émetteur (1) sont envoyés, afin d'être retardés, à une ligne à retard (11,12), qui comporte au moins un circuit d'affaiblissement (9) et qui est raccordée, par l'intermédiaire du transducteur électrodynamique (2), à l'unité d'évaluation (6), et que des signaux retardés (14) sont comparés dans l'unité d'évaluation (6) à une valeur de consigne pour un signal retardé (14).

2. Procédé de contrôle suivant la revendication 1, caractérisé par le fait que la ligne à retard est une ligne à retard à ultrasons (11,12).

3. Procédé de contrôle suivant la revendication 1, caractérisé par le fait que la ligne à retard est une ligne à retard électromagnétique.

4. Procédé de contrôle suivant la revendication 2, caractérisé par le fait que la ligne à retard à ultrasons (11,12) comporte au moins un transducteur piézoélectrique ou magnétostrictif (11) et un conducteur de guidage du son (12), qui y est raccordé.

5. Procédé de contrôle suivant la revendication 4, caractérisé par le fait que les signaux sont envoyés par réflexion au transducteur (11), dans le dispositif de guidage du son (12).

6. Procédé de contrôle suivant la revendication 4 ou 5, caractérisé par le fait que les fréquences propres du transducteur piézoélectrique ou magnétostrictif (11) et du transducteur électrodynamique (2) sont approximativement identiques.

7. Procédé de contrôle suivant l'une des revendications 1 à 6, caractérisé par le fait que le circuit d'affaiblissement est au moins une résistance branchée en amont de la ligne à retard (11,12).

8. Procédé de contrôle suivant l'une des revendications 1 à 7, caractérisé par le fait qu'à l'unité d'évaluation (6) est associé au moins un circuit formant porte de commande temporelle (19 A, 19 B), qui s'ouvre, d'une part, lors de l'apparition du signal réfléchi (8), et, d'autre part, lors de l'apparition du signal retardé (14).
